# EUROPÄISCHE PATENTSCHRIFT

(11) **EP 0 535 006 B1**
(45) Veröffentlichungstag und Bekanntmachung des Hinweises auf die Patenterteilung: **26.07.1995**
(21) Anmeldenummer: 91909780.8
(22) Anmeldetag: 22.05.1991
(51) Int. Cl.: B29C 45/42

(54) **ENTFORMUNGSVORRICHTUNG MIT GREIFER UND AUSWERFER FÜR EINE FORMMASCHINE, INSBESONDERE EINE SPRITZGIESSMASCHINE**
MOULD RELEASE DEVICE WITH GRIPPER AND EJECTOR FOR A MOULDING MACHINE, IN PARTICULAR AN INJECTION MOULDING MACHINE
DISPOSITIF DE DEMOULAGE A GRIFFE ET A EJECTEUR POUR UNE MACHINE A MOULER, EN PARTICULIER POUR UNE PRESSE D'INJECTION

(30) Priorität: 01.06.1990 DE 4017796
(43) Veröffentlichungstag der Anmeldung: 07.04.1993
(73) Patentinhaber: HERBST, Richard, D-85386 Eching (DE)
(72) Erfinder: HERBST, Richard, D-85386 Eching (DE)
(74) Vertreter: Witte, Alexander, Dr.-Ing.
(86) Internationale Anmeldenummer: EP9100955
(87) Internationale Veröffentlichungsnummer: WO9118728

(56) Entgegenhaltungen:
- DE-A- 3 624 677
- GB-A- 1 494 192
- US-A- 3 081 486
- PATENT ABSTRACTS OF JAPAN vol. 13, no. 392 (M-865)(3740) 30. August 1989 & JP-A-1 139 225 (SEIKO EPSON CORP. ) 31. Mai 1989 siehe das ganze Dokument

## Beschreibung

Die Erfindung betrifft eine Entformungsvorrichtung von der im Oberbegriff des Anspruchs 1 angegebenen Art. Derartige Entformungsvorrichtungen werden insbesondere bei Spritzgießmaschinen für die Herstellung von Kunststofformteilen verwendet, können aber auch in Formmaschinen anderer Art, wie z.B. Druckgußmaschinen, Formpressen u.dgl. Verwendung finden.

Mit einer derartigen Entformungsvorrichtung läuft der Entformungsvorgang wie folgt ab: Zuerst wird das Formwerkzeug durch Auseinanderfahren der Formhälften geöffnet. Dann wird der Greifer in das geöffnete Formwerkzeug eingefahren. Anschließend führt der Auswerfer seinen Ausstoßhub durch, so daß mittels eines oder mehrerer Auswerferstifte das Formteil teilweise aus dem Formhohlraum herausbewegt und in den Greifbereich des Greiforganes gebracht wird, so daß es vom Greiforgan erfaßt werden kann. Dann führt der Greifer oder das Greiforgan - relativ zum Greifer - die Abrückbewegung parallel zur Ausstoßrichtung durch, um das vom Greiforgan gehaltene Formteil nun vollständig aus dem Formhohlraum zu lösen und es auch von den Auswerferstiften abzuheben. Diese Abrückbewegung des Greifers kann auch bereits beginnen, bevor der Auswerfer den Endpunkt seines Ausstoßhubes erreicht hat. Nach Durchführung der Abrückbewegung kann dann die Ausfahrbewegung des Greifers quer zur Ausstoßrichtung erfolgen, mit der das vom Greiforgan gehaltene Formteil aus dem Formwerkzeug heraus bis in eine Position bewegt wird, wo das Formteil für die weitere Behandlung oder den Weitertransport abgenommen werden kann. Die verschiedenen Bewegungsvorgänge des Formwerkzeugs, des Greifers und des Auswerfers müssen sorgfältig aufeinander abgestimmt und teilweise in zeitlicher Überlappung durchgeführt werden, um einerseits Zeitverlust zu vermeiden und eine hohe Taktgeschwindigkeit der Maschine zu erreichen, andererseits aber die Gefahr von gegenseitigen Behinderungen dieser Bewegungen und von Beschädigungen der bewegten Teile, auch im Falle von Antriebsstörungen, mit Sicherheit auszuschließen.

Bei den bisher üblichen Entformungsvorrichtungen dieser Art ist für die Durchführung der zur Ausstoßrichtung parallelen Abrückbewegung des Greifers oder des Greiforgans ein eigener Antrieb erforderlich, der zusätzlich zu den Antrieben für das öffnen und Schließen des Formwerkzeugs, für das Betätigen des Auswerfers und für das Ein- und Ausfahren des Greifers vorgesehen ist. Dieser Antrieb für die Abrückbewegung stellt einen zusätzlichen konstruktiven Aufwand dar, der die Gesamtvorrichtung verteuert und auch störanfälliger macht. Die am Greifer bzw. Greiforgan anzubringenden Bestandteile dieses Antriebs erhöhen die bei jedem Ein- und Ausfahren des Greifers zu bewegende Masse. Das Hauptproblem besteht jedoch darin, den Antrieb für die Abrückbewegung in optimaler zeitlicher Abstimmung mit den Bewegungen des Auswerferantriebs und den übrigen Antrieben derart zu steuern, daß möglichst geringe Zeitverluste entstehen und möglichst hohe Taktgeschwindigkeiten der Formmaschine möglich sind.

Bei separat anzusteuernden Antrieben entstehen wegen der Ansprech- und Schaltzeiten der zugehörigen Schalter, Signalgeber u.dgl. und der erforderlichen Beschleunigungszeiten unvermeidliche Zeitverluste.

Aufgabe der Erfindung ist es, eine Vorrichtung der genannten Art so auszubilden, daß sie baulich und steuerungsmäßig vereinfacht wird und eine optimale und verlustfreie Abstimmung der Abrückbewegung des Greiforgans auf die Ausstoßbewegung des Auswerfers ermöglicht.

Die erfindungsgemäße Lösung der Aufgabe ist im Anspruch 1 angegeben. Die Unteransprüche beziehen sich auf bevorzugte weitere Ausgestaltungen der Erfindung.

Durch die Erfindung wird ein eigener Antrieb für die Abrückbewegung des Greiforgangs eingespart, und diese Abrückbewegung wird durch direkte Antriebsübertragung vom Auswerferantrieb gesteuert. Dadurch wird eine erhebliche konstruktive Vereinfachung erzielt. Zeitverluste durch Ansprech- und Schaltzeiten können nicht entstehen.

Ausführungsformen der Erfindung werden anhand der Zeichnungen erläutert. Es zeigt:
- Fig. 1: ein vereinfachtes Prinzipschema, teilweise im Schnitt, einer Entformungseinrichtung gemäß einer ersten Ausführungsform;
- Fig. 2: in ähnlicher Darstellung eine zweite Ausführungsform;
- Fig. 3 und 4: in noch weiter vereinfachter Darstellung zwei weitere Ausführungsformen;

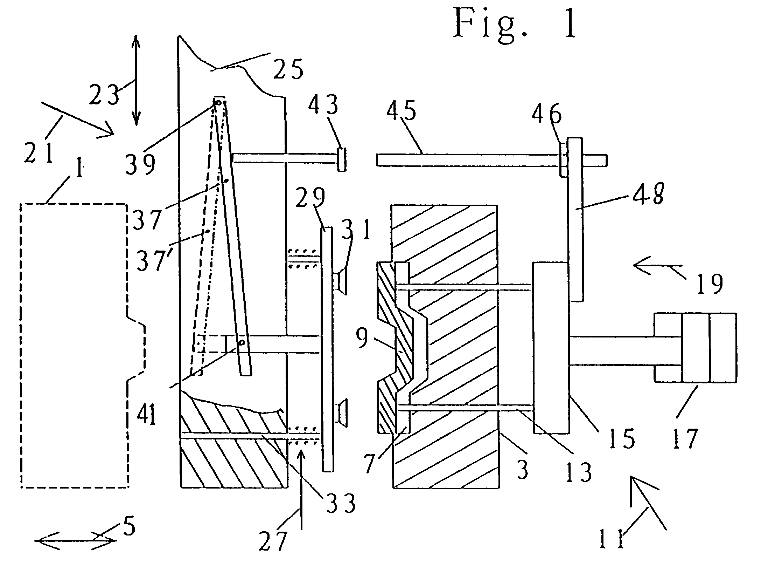

In Fig. 1 sind mit 1 und 3 die beiden Formhälften eines Formwerkzeugs einer Spritzgießmaschine oder anderen Formmaschine dargestellt, die in Richtung des Pfeiles 5 relativ zueinander bewegbar sind, um einen Formhohlraum 7 zu schließen oder zu öffnen. Ein in dem Formhohlraum 7 geformtes Formteil 9, z.B. ein Spritzgießteil, kann bei geöffnetem Formwerkzeug mittels des Auswerfers 11 aus dem Formhohlraum 7 ausgestoßen werden. Der Auswerfer 11 besteht aus Auswerferstiften 13, die von einer Auswerferplatte 15 getragen sind, die mittels eines Auswerferantriebs 17, z.B. einem hydraulischen Zylinder, in Richtung des Pfeiles 19 hin- und herbewegt werden kann.

Zwischen den geöffneten Formhälften 1,3 kann ein Greifer 21 in Richtung des Pfeiles 23 ein- und ausgefahren werden. Der Greifer 21, der Teil eines separaten Handlinggerätes, Roboters od.dgl. sein kann, besteht aus einem Greiferarm 25, an dem ein Greiforgan 27 beweglich gelagert ist. Das Greiforgan 27 besteht aus einer Greiferplatte 29, die dem Formteil 9 zugewendete Saugnäpfe 31 trägt, die an eine (nicht dargestellte) Vakuumquelle angeschlossen sind. Die Greiferplatte 29 ist mittels Führungsstiften 33 am Greiferarm 25 verschiebbar gelagert. Anstelle der Saugnäpfe 31 können auch andere, an sich bekannte Greifelemente z.B. zum mechanischen Ergreifen des Formteils 9 vorgesehen sein.

Die Bewegung des Greiforgans 27 ist mittels eines Hebelarms 37 steuerbar, der am Greiferarm 25 in einem Schwenklager 39 gelagert und an seinem Ende mit der Greiferplatte 29 über ein Gelenk 41 verbunden ist. An einer zwischen dem Lager 39 und Gelenk 41 liegenden Stelle trägt der Hebelarm 39 einen Anschlag 43, auf den ein mit der Auswerferplatte 15 verbundener Stößel 45 einwirken kann.

Die Vorrichtung arbeitet wie folgt: Nach dem Öffnen der Formhälften 1,3, oder schon während der Öffnungsbewegung, wird der Greiferarm 25 in Richtung des Pfeiles 23 zwischen die Formhälften 1,3 eingefahren. Wenn der Greiferarm 25 seine Endposition erreicht hat oder bereits während des letzten Teils der Einfahrbewegung beginnt der Auswerferantrieb 17 die Auswerferplatte 15 in Pfeilrichtung 19 für den Ausstoßhub zu betätigen, so daß die an dem Formteil 9 angreifenden Auswerferstifte 13 dieses vom Boden des Formhohlraums 7 lösen und in Richtung auf die Saugnäpfe 31 des Greiforgans 27 bewegen, bis das Formteil 9 an den Saugnäpfen 31 anliegt und von diesen gehalten wird. Dies geschieht zu einem Zeitpunkt, an welchem das Formteil 9 noch nicht vollständig jeden Kontakt mit der Formhälfte 3 verloren hat.

Bei fortgesetzter Bewegung der Auswerferplatte 15 in Ausstoßrichtung 19 kommt der Stößel 45 zur Anlage am Anschlag 43, so daß nun der Hebelarm 37 bewegt und in die strichpunktiert angedeutete Stellung 37' gedreht wird. Dadurch wird das Greiforgan 27 zusammen mit dem ergriffenen Formteil 9 in Richtung des Pfeiles 19 weiter von der Formhälfte 3 weg und näher an den Greiferarm 23 heranbewegt. Aufgrund der unterschiedlichen Hebelarmlängen zwischen dem Anschlag 43 und dem Hebellager 39 bzw. zwischen dem Gelenk 41 und dem Hebellager 39 erfolgt dabei die Bewegung des Greiforgans 37 mit größerer Geschwindigkeit als die Bewegung der Auswerferplatte 15. Stößel 45, Anschlag 43 und Hebelarm 37 stellen somit eine übersetzende (Transmissionsverhältnis größer als 1) Antriebsübertragung zwischen dem Auswerferantrieb 17 und dem Greiforgan 27 dar. Somit führt das Greiforgan 27 während des letzten Teils des Ausstoßhubes des Auswerferantriebs 7 eine Abrückbewegung parallel zur Abstoßrichtung 19 durch. Da diese mit größerer Geschwindigkeit erfolgt als die Ausstoßbewegung der Ausstoßerstifte 13, wird das vom Greiforgan 29,31 ergriffene Formteil 9 nicht nur vollständig aus dem Formhohlraum 7 herausbewegt, sondern auch von den Auswerferstiften 13 abgehoben, so daß es nun bei der anschließenden Ausfahrbewegung des Greifarms 25 entgegengesetzt zur Pfeilrichtung 23 mitbewegt werden kann, ohne dabei von der Formhälfte 3 oder den Auswerferstiften 13 behindert zu werden. In der ausgefahrenen Stellung des Greifarms 25 kann das Greiforgan 29,31 dann, vor oder nach Abnahme des Formteils 9, wieder in die vorgeschobene Stellung zurückgestellt werden. Zu diesem Zweck können der Ausfahrstellung des Greifarms 25 Rückstellelemente (nicht dargestellt) zugeordnet sein, die entweder als ortsfeste Anschläge oder Führungen oder als aktive Elemente ausgebildet sind und auf die Greiferplatte 29 im Sinne der Rückstellbewegung einwirken.

Der Stößel 45 ist selbstverständlich senkrecht zur Zeichenebene von Fig. 1 derart versetzt zum Formhohlraum 7 angeordnet, daß er das Ausfahren des Greifers 25 mit dem Formteil 9 nicht behindert. Der Stößel 45 braucht auch nicht, wie dargestellt, seitlich an der Formhälfte 3 vorbeigeführt zu sein, sondern kann mittels einer Führung durch die Formhälfte 3 hindurchgeführt werden. Um den Zeitpunkt des Auftreffens des Stößels 45 auf den Gegenanschlag 43 bzw. das Ausmaß der Abrückbewegung des Greiforgans 29,31 zu verändern, können der Stößel 45 und/oder der Gegenanschlag 43 verstellbar ausgebildet sein. Als Beispiel für eine solche verstellbare Anordnung ist in Fig. 1 dargestellt, daß der Stößel 45 in einer Halterung 48 verstellbar geführt und seine Position durch eine Mutter 46 fixierbar ist.

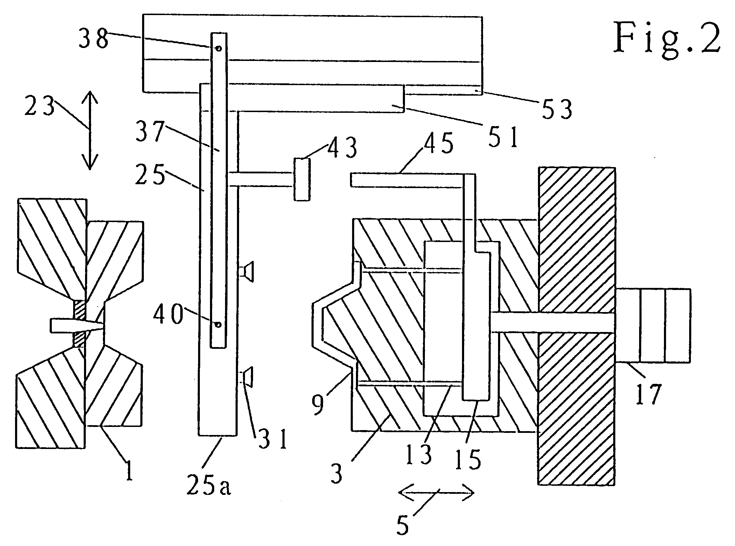

Abweichend von der Ausführungsform nach Fig. 1 kann der gesamte Greiferarm 25 parallel zur Ausstoßrichtung beweglich gelagert sein und die Nachrückbewegung ausführen. Eine separate bewegliche Lagerung des Greiforgans am Greiferarm ist dann nicht erforderlich. Ferner braucht das antriebsübersetzende Hebelgestänge nicht am Greifer vorgesehen zu sein, sondern kann sich auch werkzeugseitig zwischen dem Auswerferantrieb 19 und dem Stößel 45 befinden. Auch braucht die Antriebsübertragung nicht als mechanisches Gestänge ausgebildet zu sein, sondern kann z.B. auch in Form einer hydraulischen Kupplung ausgebildet sein. Solche abweichenden Ausführungsformen sind in den Fig. 2 bis 4 dargestellt, die im folgenden beschrieben werden. Dabei werden Teile, die bereits anhand von Fig. 1 beschrieben wurden, und mit gleichen Bezugszeichen versehen sind, nicht nochmals erläutert.

Bei der Ausführungsform nach Fig. 2 ist der Greiferarm 25 mittels eines Führungsschlittens 51 in einer Führung 53 parallel zur Pfeilrichtung 5 verschiebbar. In der Ein- und Ausfahrrichtung 23 des Greiferarms 25 kann die Führung 53 zusammen mit dem Greiferarm 25 mittels eines nicht dargestellten Antriebs bewegt werden. An einem Hebel 37, der bei 38 und 40 schwenkbar an der Führung und am Greiferarm gelagert ist, befindet sich ein Gegenanschlag 43, auf den ein mit der Auswerferplatte 15 bewegter Stößel 45 während der Ausstoßbewegung des Auswerfers zur Anlage gelangt. Dadurch wird eine Abrückbewegung des gesamten Greiferarms 25 parallel zur Ausstoßrichtung bewirkt, wobei der Hebelarm 45 für eine Antriebsübersetzung sorgt. Bei dieser Ausführungsform ist ein beweglich am Greiferarm 25 gelagertes Greiforgan nicht erforderlich, vielmehr bildet der Endabschnitt 25a des Greiferarms 25 das Greiforgan, an dem unmittelbar die Saugnäpfe 31 oder andere Greifelemente angebracht sind.

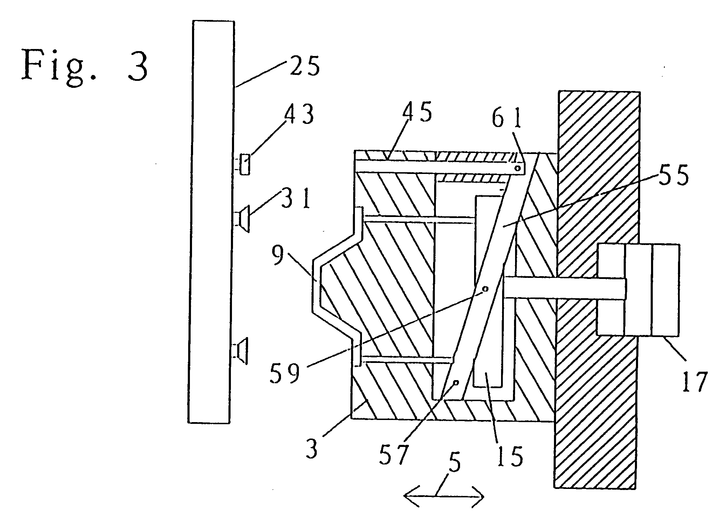

Bei der Ausführungsform nach Fig. 3 ist ebenso wie in Fig. 2 der gesamte Greiferarm 25 parallel zur Ausstoßrichtung 5 beweglich gelagert (in Fig. 3 nicht dargestellt). Am Auswerferarm 25 ist starr der Gegenanschlag 43 angebracht, auf den der Stößel 45 einwirkt. Der Stößel 45 ist jedoch nicht starr mit der vom Auswerferantrieb 17 betätigbaren Auswerferplatte 15 verbunden, wie bei den Ausführungsformen nach Fig. 1 und 2. Stattdessen ist ein Hebel 55 vorgesehen, dessen eines Ende bei 57 am Formwerkzeug 3 gelagert ist, und der in seinem mittleren Bereich bei 59 mit der Auswerferplatte 15 gelenkig verbunden ist. Am anderen Ende ist der Hebel 55 bei 61 mit dem Stößel 45 gelenkig verbunden. Wenn der Auswerferantrieb 17 die Auswerferplatte 13 in Ausstoßrichtung bewegt, wird diese Bewegung über den Hebel 55 mit Übersetzung auf den Stößel 45 übertragen, so daß dieser sich schneller als die Auswerferplatte 15 und als das Formteil 9 nach vorne bewegt und im Verlauf des Ausstoßhubes auf den Gegenanschlag 43 trifft, so daß dann der Greiferarm 25 zusammen mit dem von den Saugnäpfen 31 ergriffenen Formteil die Abrückbewegung in Fig. 3 nach links ausführt.

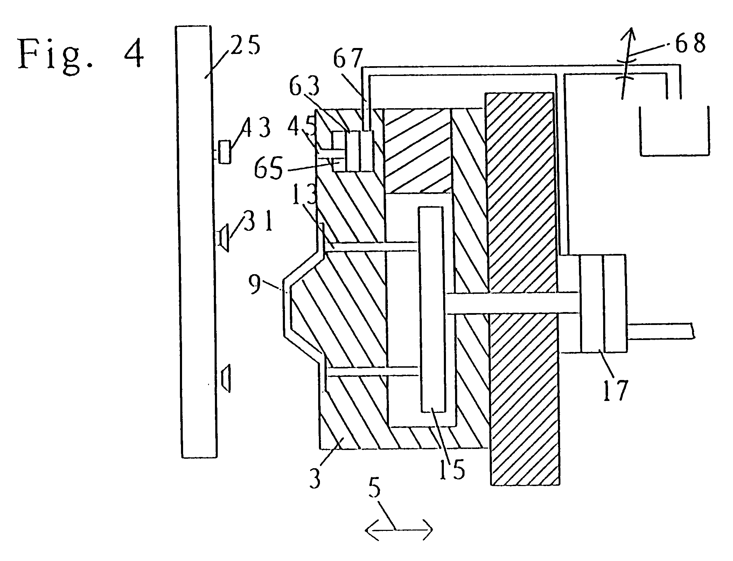

Auch bei der Ausführungsform nach Fig. 4 ist der gesamte Greiferarm 25 parallel zur Pfeilrichtung 5 verschiebbar gelagert (nicht dargestellt) und trägt einen fest angeordneten Gegenanschlag 43. Auf diesen wirkt ein am Formwerkzeug 3 gelagerter Stößel 45, der hydraulisch mittels eines Kolbens 63 und Hydraulikzylinders 65 antreibbar ist. Der Auswerferantrieb 17 ist - wie auch bei den Ausführungsformen nach Fig. 1 bis 3 - als Hydraulikzylinder ausgebildet, und eine Leitung 67 verbindet den stangenseitigen Arbeitsraum des Hydraulikzylinders 67 mit dem kolbenseitigen Arbeitsraum des Hydraulikzylinders 65. Der wirksame Querschnitt des Hydraulikzylinders 65 ist kleiner als der des Hydraulikzylinders 17. Wenn der kolbenseitige Arbeitsraum des Antriebszylinders 17 mit Druckmittel beaufschlagt wird, um den Ausstoßhub der Auswerferplatte 15 und der Auswerferstifte 13 durchzuführen, wird das aus dem stangenseitigen Arbeitsraum des Zylinders 17 verdrängte Druckmittel in den kolbenseitigen Arbeitsraum des Zylinders 65 gedrückt, so daß der Kolben 63 mit dem Stößel 45 in Fig. 4 nach links verschoben wird, so daß er auf den Gegenanschlag 43 auftrifft und über diesen den Greiferarm 25 zur Abrückbewegung nach links antreibt. Durch die unterschiedlichen Querschnittsflächen der Antriebszylinder 17 und 65 ergibt sich eine Bewegungsübersetzung, so daß die Vorschubbewegung des Kolbens 63 und des Stößel 45 mit größerer Geschwindigkeit erfolgt als die Vorschubbewegung der Auswerferplatte 15 und der Auswerferstifte 13.

Weitere Abänderungen und Ausgestaltungen sind im Rahmen des Erfindungsprinzips möglich. So kann z.B. die hydraulische Antriebsübertragung gemäß Fig. 4 auch dann angewendet werden, wenn nicht der gesamte Greiferarm 25, sondern ein am Greiferarm beweglich gelagertes Greiforgan die Abrückbewegung durchführt, wie bei der Ausführungsform nach Fig. 1. Auch könnte z.B. bei der Ausführungsform nach Fig. 1 die Kopplung des Gegenanschlags 43 mit der Greiferplatte 29 nicht mechanisch über einen Hebel 37, sondern z.B. hydraulisch erfolgen. Auch kann der Greifer mit einem Antrieb ausgerüstet sein, mit dem eine Anfahrbewegung an das Formteil 9 bzw. Anschlag 45 ausgeführt wird.

In vorteilhafter Ausgestaltung der Erfindung können bei den Ausführungsformen nach Fig. 1 bis 3 der Stößel 45 und/oder der Gegenanschlag 43 mit Federelementen und/oder Stoßdämpfern kombiniert sein, so daß ein schlagartiges Auftreffen des Stößels 45 auf den Gegenanschlag 43 verhindert bzw. abgefedert und gedämpft wird.

In weiterer Ausgestaltung der Erfindung kann vorgesehen sein, daß das Übersetzungsverhältnis der Transmission veränderbar ist. So kann z.B. bei der Verwendung eines Übersetzungshebels gemäß Fig. 1 bis 3 einer der Lagerpunkte 39,40,41 des Hebels 37 derart verstellbar ausgebildet sein, daß durch Anderung der wirksamen Hebelarmlänge das Übersetzungsverhältnis geändert wird. Bei der hydraulischen Transmission gemäß Fig. 4 kann an die Verbindungsleitung 67 eine Abzweigung mit verstellbarer Drosselstelle 68 angeschlossen sein, durch die ein einstellbarer Teil der durch die Leitung 67 fließenden Hydraulikflüssigkeit abgeleitet werden kann, so daß die Menge der dem Zylinder 65 zuströmenden Hydraulikflüssigkeit einstellbar ist.

Die Erfindung wurde anhand der Ausführungsbeispiele nur in Zusammenhang mit einem Auswerfer und einem Greifer dargestellt. Sie ist selbstverständlich auch dann anwendbar, wenn dem gleichen Formwerkzeug mehrere Greifer z.B. zur Entnahme mehrerer Formteile aus einem Mehrfachformwerkzeug zugeordnet sind. Ferner ist die Erfindung anwendbar, bei sogenannten Etagenwerkzeugen, bei denen mehrere, jeweils mit Auswerfersystemen versehene Formwerkzeuge etagenartig hintereinander angeordnet sind und mehrere Greifer zwischen die geöffneten Formwerkzeuge einfahrbar sind. Bei allen derartigen, mit mehreren Greifern arbeitenden Systemen kann in Anwendung der Erfindung jeder Greifer bzw. jedes Greifwerkzeug von dem jeweils zugeordneten Auswerfersystem durch eine entsprechende übersetzende Antriebstransmission zur Ausrückbewegung angetrieben werden.

## Patentansprüche

1. Entformungsvorrichtung für eine Formmaschine, insbesondere eine Spritzgießmaschine, mit einem in das geöffnete Formwerkzeug (13) einfahrbaren Greifer (21) mit einem Greiforgan (27), einem dem Formwerkzeug (13) zugeordneten Auswerfer (13, 15, 17), einem auf den Auswerfer für die Durchführung des Ausstoßhubes einwirkenden Auswerferantrieb (17), und einer Einrichtung, mit der das Greiforgan (27) oder der Greifer (21) zusammen mit dem ergriffenen Werkstück (9) parallel zur Ausstoßrichtung (5) zur Durchführung einer Abrückbewegung von dem Auswerfer (13, 15, 17) bewegbar ist,
dadurch **gekennzeichnet,** daß der Auswerferantrieb (17) während mindestens des letzten Teils des Ausstoßhubes mit dem Greifer (21) oder Greiforgan (27) über eine Antriebsübertragung (45,43,37;67,63,45,43) gekoppelt ist und daß die Antriebsübertragung ein Übersetzungsverhältnis größer als 1 aufweist.

2. Vorrichtung nach Anspruch 1, dadurch **gekennzeichnet,** daß das Greiforgan (27) am Greifer (21) parallel zur Ausstoßrichtung bewegbar gelagert und durch die Antriebsübertragung (45,43,37) relativ zum Greifer zur Durchführung der Abrückbewegung bewegbar ist.

3. Vorrichtung nach Anspruch 1 oder 2, dadurch **gekennzeichnet,** daß ein mittels der Antriebsübertragung parallel zur Ausstoßrichtung bewegbarer Anschlag (45) vorgesehen ist, der während der Ausstoßbewegung des Auswerfers (11) an einem mit dem Greifer (21) oder Greiforgan (27) verbundenen Gegenanschlag (43) zur Anlage kommt und diesen mitbewegt, wobei der Auswerferantrieb (17) mit dem Anschlag (45) über eine übersetzende Antriebsübertragung (55;63,65,67) verbunden ist, die den Anschlag (45) mit größerer Geschwindigkeit als die Ausstoßgeschwindigkeit des Auswerfers (11) antreibt.

4. Vorrichtung nach Anspruch 1 oder 2, dadurch **gekennzeichnet,** daß ein mittels des Auswerferantriebs (17) in Ausstoßrichtung bewegbarer Anschlag (45) vorgesehen ist, der während der Ausstoßbewegung des Auswerfers (11) an einem mit dem Greifer (21) oder Greifwerkzeug (27) verbundenen Gegenanschlag (43) zur Anlage kommt und diesen mitbewegt, wobei der Gegenanschlag (43) mit dem Greifer (21) oder Greiforgan (27) über eine übersetzende Antriebsübertragung (37) verbunden ist, die den Greifer oder das Greiforgan mit größerer Geschwindigkeit als die Geschwindigkeit des Anschlags (45) antreibt.

5. Vorrichtung nach Anspruch 4, dadurch **gekennzeichnet,** daß die Antriebsübertragung einen drehbar gelagerten Hebel (37) umfaßt, mit dem der Gegenanschlag (43) in einem ersten Abstand von der Drehachse (39) und der Greifer oder das Greiforgan (27) in einem zweiten, größeren Abstand von der Drehachse (39) verbunden ist.

6. Vorrichtung nach Anspruch 3, dadurch **gekennzeichnet,** daß die Antriebsübertragung einen drehbar gelagerten Hebel (55) umfaßt, an dem der Auswerferantrieb (17) in einem ersten Abstand von der Drehachse (57) angreift und der in einem zweiten, größeren Abstand von seiner Drehachse mit dem Anschlag (45) verbunden ist.

7. Vorrichtung nach Anspruch 3, dadurch **gekennzeichnet,** daß der Auswerferantrieb (17) einen Hydraulikzylinder aufweist, daß der Anschlag (45) mittels eines weiteren Hydraulikzylinders (65) parallel zur Ausstoßrichtung bewegbar ist, daß die wirksame Querschnittsfläche des zweiten Hydraulikzylinders (65) kleiner als die des Hydraulikzylinders des Auswerferantriebs (17) ist und daß eine Verbindungsleitung (67) für vom Hydraulikzylinder des Auswerferantriebs (17) verdrängtes Druckmittel zu dem weiteren Hydraulikzylinder (65) vorgesehen ist.

8. Vorrichtung nach Anspruch 1, dadurch **gekennzeichnet,** daß das Übersetzungsverhältnis der Antriebsübertragung einstellbar ist.

9. Vorrichtung nach einem der Ansprüche 3 bis 7, dadurch **gekennzeichnet,** daß der Anschlag (45) und/oder der Gegenanschlag (43) relativ zueinander verstellbar sind.

10. Vorrichtung nach einem der Ansprüche 3 bis 9, dadurch **gekennzeichnet,** daß dem Anschlag (45) und/oder dem Gegenanschlag (43) ein Federelement und/oder ein stoßdämpfendes Element zugeordnet ist.

## Claims

1. A demolding apparatus for a molding machine, in particular an injection-molding machine, having a gripper (21) which can be made to run into the opened mold (1, 3) and has a gripping member (27), an ejector (13, 15, 21) being assigned to the mold (1, 3), an ejector drive (17) acting on the ejector for carrying out the ejecting stroke, and a device by which the gripping member (27) or the gripper (21) can be moved together with the gripped workpiece (9) parallel to the direction of ejection for carrying out a moving away movement from the ejector (13, 15, 17), characterized in that the ejector drive (17) is coupled, at least during the final part of the ejecting stroke, to the gripper (21) or gripping member (27) by means of a drive transmission (45, 43, 37; 67, 63, 45, 43) and that the drive transmission has a stepping-up ration greater than unity.

2. The apparatus of claim 1, characterized in that the gripping member (27) is movably mounted on the gripper (21) parallel to the direction of ejection and can be moved by the drive transmission (45, 43, 37) in relation to the gripper for carrying out the moving away movement.

3. The apparatus of claim 1 or 2, characterized in that a stop (45) is provided, which can be moved by means of the drive transmission parallel to the direction of ejection and which during the ejecting movement of the ejector (11) comes to bear against and moves along a counter-stop (43) connected to the gripper (21) or gripping member, the ejector drive (17) being connected to the stop (45) by means of a stepping-up drive transmission (55; 63, 65, 67), which drives the stop (45) at greater speed than the ejecting speed of the ejector (11).

4. The apparatus of claim 1 or 2, characterized in that a stop (45) is provided, which can be moved by means of the ejector drive (17) in the direction of ejection and which during the ejecting movement of the ejector (11) comes to bear against and moves along a counter-stop (43) connected to the gripper (21) or gripping member (27), the counter-stop (43) being connected to the gripper (21) or gripping member (27) by means of a stepping-up drive transmission (37), which drives the gripper or the gripping member at greater speed than the speed of the stop (45).

5. The apparatus of claim 4, characterized in that the drive transmission comprises a pivotally mounted lever (37), by which the counter-stop (43) is connected at a first distance from the pivot axis (39) and the gripper or the gripping member (27) is connected at a second, greater distance from the pivot axis (39).

6. The apparatus of claim 3, characterized in that the drive transmission comprises a pivotally mounted lever (55), which the ejector drive (17) engages at a first distance from the pivot axis (57) and which is connected at a second, greater distance from its pivot axis to the stop (45).

7. The apparatus of claim 3, characterized in that the ejector drive (17) has a hydraulic cylinder, that the stop (45) can be moved by means of a further hydraulic cylinder (65) parallel to the direction of ejection, that the effective cross-sectional surface area of the second hydraulic cylinder (65) is less than that of the hydraulic cylinder of the ejector drive (17) and that a connection line (67) for pressure medium displaced from the hydraulic cylinder of the ejector drive (17) to the further hydraulic cylinder (65) is provided.

8. The apparatus of claim 1, characterized in that the stepping-up ratio of the drive transmission is adjustable.

9. The apparatus of any of claims 3 to 7, characterized in that the stop (45) and/or the counter-stop (43) are adjustable in relation to each other.

10. The apparatus of any of claims 3 to 9, characterized in that the stop (45) and/or the counter-stop (43) is assigned a spring element and/or a shock-absorbing element.

## Revendications

1. Dispositif de démoulage pour une machine à mouler, en particulier pour une presse d'injection, doté d'une griffe (21) avec un organe préhenseur (27) et susceptible d'être introduite dans l'outil de moulage (1, 3) ouvert, d'un éjecteur (13, 15, 17) associé à l'outil de moulage (1, 3), d'une commande d'éjecteur (17) commandant la course d'éjection de l'éjecteur et d'un dispositif avec lequel l'organe préhenseur (27) ou la griffe (21) peut se déplacer, après avoir saisi la pièce (9), parallèlement à la direction d'éjection (5) afin que l'éjecteur (13, 15, 17) puisse effectuer un mouvement de recul,
caractérisé en ce que la commande d'éjecteur (17) est couplée, au moins pendant la dernière partie de la course d'éjection, avec la griffe (21) ou l'organe préhenseur (27) au moyen d'une transmission de commande (45, 43, 37 ; 67, 63, 45, 43) et en ce que ladite transmission de commande présente un rapport de transmission supérieur à 1.

2. Dispositif selon la revendication 1, caractérisé en ce que l'organe préhenseur (27) est monté mobile sur paliers sur la griffe (21), parallèlement à la direction d'éjection et est susceptible d'être déplacé par rapport à la griffe au moyen de la transmission de commande (45, 43, 37), afin de réaliser un mouvement de recul.

3. Dispositif selon la revendication 1 ou 2, caractérisé en ce qu'il est prévu une butée (45) susceptible d'être déplacée parallèlement à la direction d'éjection au moyen de la transmission de commande et qui vient prendre appui, pendant le mouvement d'éjection de l'éjecteur (11), sur une contre-butée (43) associée à la griffe (21) ou à l'organe préhenseur (27), et entraîne ladite contrebutée avec elle, la commande d'éjecteur (17) étant raccordée à la butée (45) au moyen d'une transmission de commande (55 ; 63, 65, 67) multipliée qui entraîne la butée (45) à une vitesse supérieure à la vitesse d'éjection de l'éjecteur (11).

4. Dispositif selon la revendication 1 ou 2, caractérisé en ce qu'il est prévu une butée (45) susceptible d'être déplacée dans la direction de l'éjection au moyen de la commande d'éjecteur (17) et qui, pendant le mouvement d'éjection de l'éjecteur (11), vient prendre appui sur une contrebutée (43) associée à la griffe (21) ou à l'outil préhenseur (27) et entraîne ladite contre-butée avec elle, ladite contre-butée (43) étant raccordée à la griffe (21) ou l'organe préhenseur (27) par une transmission de commande (37) multipliée, qui entraîne la griffe ou l'organe préhenseur à une vitesse supérieure à la vitesse de la butée (45).

5. Dispositif selon la revendication 4, caractérisé en ce que la transmission de commande comprend un levier oscillant (37) auquel la contrebutée (43) est raccordée à une première distance de l'axe de rotation (39) et auquel la griffe ou l'organe préhenseur (27) est associé(e) à une seconde distance, supérieure, de l'axe rotatif (39).

6. Dispositif selon la revendication 3, caractérisé en ce que la transmission de commande comprend un levier oscillant (55) sur lequel agit la commande d'éjecteur (17) à une première distance de l'axe rotatif (57) et qui est raccordé à la butée (45) à une seconde distance, supérieure, de son axe rotatif.

7. Dispositif selon la revendication 3, caractérisé en ce que la commande d'éjecteur (17) comprend un vérin hydraulique, en ce que la butée (45) est susceptible d'être déplacée parallèlement à la direction d'éjection au moyen d'un autre vérin hydraulique (65), en ce que la surface effective de la section transversale du deuxième vérin hydraulique (65) est inférieure à celle du vérin hydraulique de la commande d'éjecteur (17) et en ce qu'une conduite de liaison (67) est prévue jusqu'à l'autre vérin hydraulique (65) pour le fluide de pression déplacé par le vérin hydraulique de la commande d'éjecteur (17).

8. Dispositif selon la revendication 1, caractérisé en ce que le rapport de transmission de la transmission de commande est réglable.

9. Dispositif selon l'une des revendications 3 à 7, caractérisé en ce que la butée (45) et/ou la contre-butée (43) sont réglables l'une par rapport à l'autre.

10. Dispositif selon l'une des revendications 3 à 9, caractérisé en ce qu'un élément élastique et/ou un élément amortisseur est/sont associée(s) à la butée (45) et/ou la contrebutée (43).
